# EUROPÄISCHE PATENTSCHRIFT

(11) **EP 2 366 929 B1**
(45) Veröffentlichungstag und Bekanntmachung des Hinweises auf die Patenterteilung: **23.10.2013**
(21) Anmeldenummer: 10405056.2
(22) Anmeldetag: 19.03.2010
(51) Int. Cl.: F16L 13/14

(54) **Anschlussstück**
Connecting piece
Pièce de raccordement

(43) Veröffentlichungstag der Anmeldung: 21.09.2011
(73) Patentinhaber: R. Nussbaum AG, 4601 Olten (CH)
(72) Erfinder: Kästli, Alex, 4614 Hägendorf (CH); Bobst, Urs, 4703 Kestenholz (CH); Zeitner, Patrik, 4853 Riken (CH); Mester, Reiner, 57368 Lennestadt (DE)
(74) Vertreter: Rüfenacht, Philipp Michael

(56) Entgegenhaltungen:
- DE-A1- 10 207 201
- DE-U1- 9 417 646
- GB-A- 2 336 636
- US-A- 3 690 703
- US-A1- 2004 164 263

## Beschreibung

### Technisches Gebiet

Die Erfindung betrifft ein Anschlussstück aus Metall zur Herstellung einer Pressverbindung, wobei das Anschlussstück einen im Wesentlichen zylindrischen Abschnitt sowie einen an den zylindrischen Abschnitt angrenzenden Ringwulst mit einer darin ausgebildeten Ringnut zur Aufnahme einer Ringdichtung aufweist. Die Erfindung betrifft weiter eine Armatur und ein Fitting mit einem solchen Anschlussstück.

### Stand der Technik

Fluidführende Leitungssysteme, insbesondere für Wasser oder wässrige Lösungen, sind zumeist aus mehreren Elementen (Rohren, Verbindungsstücken bzw. Fittings, Armaturen etc.) aufgebaut. Diese Elemente weisen üblicherweise Anschlussstücke mit rohrförmigen Teilen auf, wobei die rohrförmigen Teile mit entsprechenden rohrförmigen Teilen der Anschlussstücke benachbarter Elemente verbunden werden können. Damit die Verbindung dicht ist, d. h. damit ein Austreten der im Leitungssystem geführten Flüssigkeit bei den Verbindungsstellen verhindert wird, sind letztere mit Dichtungen versehen. Bei vielen Leitungssystemen, z. B. für die Wasserversorgung (inkl. Hausverteilung), ist eine lange Lebensdauer gefordert, d. h. die Verbindungen müssen über einen langen Zeitraum (z. B. 50 Jahre) dicht bleiben. Anschlussstücke, die auch für die Etagenverteilung von Warm- und Kaltwasser geeignet sein sollen, müssen beispielsweise Temperaturen bis mindestens 70°C und Drücke bis mindestens 10 bar langfristig, während der genannten Zeitdauer aushalten. Anschlussstücke, die für die Verwendung mit Metallrohren geeignet sein sollen, müssen gar Temperaturen bis mindestens 95°C und Drücke bis mindestens 16 bar langfristig, während der genannten Zeitdauer aushalten.

Zur mechanisch festen und fluiddichten Verbindung der rohrförmigen Teile sind verschiedene Verbindungstechniken bekannt. Bei einer Schraubverbindung sind die miteinander zusammenwirkenden Teile mit zueinander passenden Gewinden versehen. Bei Steckverbindungen wird im Wesentlichen durch die Ein- bzw. Aufschiebebewegung des einen rohrförmigen Teils in bzw. auf das andere die mechanisch feste und fluiddichte Verbindung hergestellt. Bei einer Pressverbindung erfolgt ein mechanisches Verpressen eines der Teile oder einer zusätzlichen Presshülse.

Pressverbinder für Anschlussstücke von Fittings oder Armaturen sind also bekannt. So zeigt beispielsweise die CH 693 996 A5 (R. Nussbaum AG, Firma Franz Viegener 11) Armaturen und Fittings aus Metallguss mit gewindefreien Stutzen, wobei die Wandstärke des Stutzens derart bemessen ist, dass dieser auf ein seinem Innendurchmesser angepasstes Rohr mithilfe einer Zange dicht aufpressbar ist. Der Stutzen weist an der Aussenseite wenigstens einen Ringwulst und an der Innenseite eine in diesen hineinragende Ringnut zur Aufnahme einer Ringdichtung auf. Der Ringwulst hat dabei einen Abstand vom freien Ende des Stutzens, so dass sowohl der den Ringwulst überragende Endteil als auch der auf der anderen Seite des Wulsts liegende Teil des Stutzens verpresst werden kann. Dabei wird in zwei vom Ringwulst beidseitig beabstandeten umlaufenden Bereichen mit einem Presswerkzeug eine sechseckige Kontur in den Stutzen und das Rohr eingepresst, welche eine dreh- und zugfeste Verbindung zwischen Stutzen und Rohr schafft.

Die GB 2 336 636 A (Automotive Products plc) beschreibt eine Verbindung für eine Bremsleitung, wobei ein starrer Abschnitt mit einem flexiblen Abschnitt verbunden wird; die Verbindung umfasst ein Fitting mit einer äusseren Hülse, welche das Ende des starren Abschnitts umschliesst und welches innen, dem flexiblen Abschnitt zugewandt eine Schulter aufweist, die mit einer Schulter am starren Abschnitt zusammenwirkt; die Hülse umfasst weiter einen Bereich, welcher das Ende des flexiblen Abschnitts umschliesst und derart verpresst ist, dass eine permanent dichte Verbindung zwischen den beiden Abschnitten der Bremsleitung geschaffen wird.

Die US 3,690,703 A (Federal Auto Products) beschreibt einen Verbinder für Schläuche verschiedener Durchmesser, wobei die Schlauchenden an einen Dichtring stossen, welcher zwischen den Schläuchen angeordnet ist. Der Dichtring und die Schläuche sind auf einer Stützhülse gehalten, welche sich beim Übergang vom engeren zum weiteren Schlauch entsprechend aufweitet. Die Schläuche und die Stützhülse sind von einer Presshülse umgeben. Als Anwendungsgebiet werden Servolenkungen für Autos angegeben.

Die US 2004/0164263 A1 (Renato Colombo) zeigt ein Ventil, an dessen Ein- und Ausgang sich auf einfache Weise Leitungen anschliessen lassen; dazu ist ein Verbinder integraler Teil des Ventilkörpers, Welcher eine Presshülse umfasst. Die Presshülse wird einerseits auf ein am Ventilkörper angeordnetes Rohr, andererseits auf die Leitung aufgepresst. Die Presshülse umfasst zwei Ringnuten, in welchen Dichtungen aufgenommen sind.

Die DE 102 07 201 A1 (Friedrich Welcher) beschreibt ein Pressfitting zur Verbindung einer Verbindungshülse mit einem. Die Verbindungshülse weist mindestens eine Sicke auf, in der ein metallischer Klemmring angeordnet ist, welcher sich bei einer Verpressung der Sicke auf dem Aussenmantel des Rohrs eingräbt. In einer weiteren oder in derselben Sicke kann ein Dichtring aus Gummi vorgesehen sein.

Die DE 94 17 646 U1 (Seppelfricke Armaturen GmbH) betrifft eine Rohrverbindung zum Anschluss an Kunststoff- und Mehrschichtverbundrohre unterschiedlicher Aussendurchmesser mit einer plastisch verformbaren Verbindungshülse, die mindestens einen umlaufenden Dichtwulst mit einer Innennut zur Aufnahme eines Dichtrings aufweist, sowie mit einer Stützhülse. Der Innendurchmesser der Verbindungshülse ist an den Aussendurchmesser des jeweiligen Rohrs angepasst, und auf derjenigen Seite neben jedem Dichtwulst, auf der eine Verpressung der Verbindungshülse stattfindet, vorzugsweise beidseitig, ist eine Entlastungsnut in der Aussenfläche der Verbindungshülse vorgesehen. Damit das Werkzeug weiterhin passt, wird bei Rohren mit kleinen Aussendurchmessern die Wandstärke der zu verformenden Verbindungshülse vergrössert. Auf der dem freien Ende der Verbindungshülse entgegengesetzten Seite ist ein Bereich mit vergrössertem Querschnitt vorhanden, welcher im Wesentlichen trapezförmig ist.

Es hat sich gezeigt, dass die entsprechende Geometrie für Armaturen und Fittings aus Rotgusslegierungen gut geeignet ist. In letzter Zeit wurden jedoch neue Metalileglerungen vorgeschlagen, welche hinsichtlich der Schadstoffabgabe an darin geführtes Trinkwasser sowie der Bearbeitungsmöglichkeiten Rotguss überlegen sind. So zeigt die EP 1 801 250 A1 (Viega GmbH & Co. KG) eine für Fittings und Armaturen geeignete, umformbare Legierung, welche im Wesentlichen aus Kupfer, Silicium, Zink und Mangan besteht.

Werden Pressverbinder bekannter Geometrie aus diesem neuen Material hergestellt, zeigt sich anschliessend, bei der Herstellung der Pressverbindung, dass höhere Verformungskräfte notwendig sind und dass die Verbindung anschliessend trotzdem nicht mechanisch fest ist.

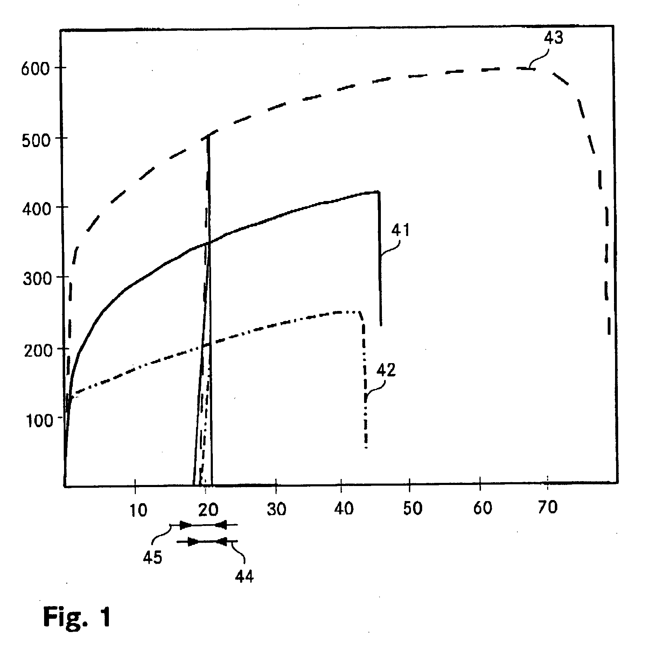

Wie aus der (weiter unten eingehender beschriebenen) Figur 1 ersichtlich ist, erfordert die neue Legierung aufgrund ihrer höheren Elastizitätsgrenze höhere Verformungskräfte und zeigt eine stärkere Rückfederung als Rotguss. Die Rückfederung führt dazu, dass sich der Stutzen nach erfolgter Verformung soweit zurückbewegt, dass die mechanische Festigkeit massiv reduziert wird und die Abdichtung verloren gehen kann. Werden die vorhandenen Presswerkzeuge und Pressbacken benutzt, ist die Verbindung im Endzustand, d. h. nach dem Rückfedern, nicht ausreichend fest.

### Darstellung der Erfindung

Aufgabe der Erfindung ist es, ein dem eingangs genannten technischen Gebiet zugehörendes Anschlussstück zu schaffen, welches die Schaffung einer dichten Pressverbindung auch dann ermöglicht, wenn es aus einem Material mit hoher Elastizitätsgrenze und/oder starker Rückfederung hergestellt ist.

Die Lösung der Aufgabe ist durch die Merkmale des Anspruchs 1 definiert. Gemäss der Erfindung ist ein Querschnitt des zylindrischen Abschnitts in einem vom Ringwulst beabstandeten ersten Bereich auf dessen Aussenseite vergrössert. Der Bereich mit vergrössertem Querschnitt ist insbesondere umlaufend mit konstantem Querschnitt ausgebildet, es ist aber auch möglich, den Bereich nur teilweise umlaufend, mit variierendem Querschnitt oder in verschiedenen axialen Abständen zum Ringwulst auszubilden.

Im Innern ist der zylindrische Abschnitt wie bis anhin zylindrisch, so dass eine passende Aufnahme für ein mit dem Anschlussstück zu verbindendes Rohr bzw. einen damit zu verbindenden Stutzen gebildet ist.

Ein geeignetes Presswerkzeug wirkt einerseits mit dem Ringwulst und andererseits mit dem ersten Bereich (mit vergrössertem Querschnitt) zusammen und schafft dort bei vorgegebener Endstellung eine höhere Verformung. Der erste Bereich ist also in Bezug auf den Ringwulst in einem derartigen axialen Abstand vorgesehen, dass er im Kontaktbereich des Presswerkzeugs mit dem zylindrischen Abschnitt liegt. Mit einem vorhandenen Presswerkzeug und vorhandenen Pressbacken kann so auch ein Material mit hoher Elastizitätsgrenze und/oder starker Rückfederung derart verpresst werden, dass eine mechanisch feste Verbindung geschaffen wird.

Das Anschlussstück kann insbesondere Teil eines Verbindungsstücks (Fittings) sein, welches eine Verbindung zwischen verschiedenen Elementen des Leitungssystems (also z. B. zwischen zwei Rohren oder zwischen einem Rohr und einer Armatur) schaffen kann. Das Anschlussstück kann auch Teil einer Armatur mit Absperr-, Regel- und/oder Ventilfunktion sein. Mit Vorteil ist die Armatur einstückig mit dem Anschlussstück aus demselben Material gefertigt. Das Anschlussstück kann aber auch mit einem Armaturen-Grundkörper verschweisst sein, wie dies in der EP 2 014 964 A1 (R. Nussbaum AG) beschrieben ist.

Ein Fitting oder eine Armatur können auch mehrere Anschlussstücke umfassen, wobei alle oder nur einige erfindungsgemäss ausgebildet sein können.

Erfindungsgemässe Fittings und Armaturen können insbesondere in den Dimensionen DN 12 bis DN 100, bevorzugt in den Dimensionen DN 15 bis DN50, ausgeführt sein und sind besonders für den Einsatz in Trinkwassersystemen geeignet.

Bei einer bevorzugten Ausführungsform ist der Querschnitt des zylindrischen Abschnitts in einem dem Ringwulst benachbarten zweiten Bereich auf dessen Aussenseite verringert. Der zweite Bereich ist somit zwischen dem ersten Bereich und dem Ringwulst angeordnet. Auch der Bereich mit verringertem Querschnitt ist insbesondere umlaufend mit konstantem Querschnitt ausgebildet, es ist aber auch möglich, den Bereich nur teilweise umlaufend, mit variierendem Querschnitt oder in verschiedenen axialen Abständen zum Ringwulst auszubilden.

Aufgrund des zweiten Bereichs mit verringertem Querschnitt, welcher in der Art einer "Soll-Knickstelle" wirkt, können die zur benötigten Verformung notwendigen Presskräfte verringert werden, so dass sie beispielsweise nicht höher sind als bei bekannten Anschlussstücken aus Rotguss. Weiter führt das Zusammenspiel zwischen den beiden unterschiedlich modifizierten Bereichen überraschenderweise auch dazu, dass eine noch weiter verbesserte mechanische Festigkeit der gesamten Pressstelle erreicht wird.

Bei einer anderen bevorzugten Ausführungsform fehlt ein zweiter Bereich mit verringertem Querschnitt.

Mit Vorteil umfasst das Anschlussstück einen zweiten zylindrischen Abschnitt, welcher auf einer dem ersten zylindrischen Abschnitt entgegengesetzten Seite an den Ringwulst angrenzt, wobei ein Querschnitt des zweiten zylindrischen Abschnitts in einem vom Ringwulst beabstandeten dritten Bereich auf dessen Aussenseite vergrössert ist. Die beiden Seiten des Ringwulsts sind dabei bevorzugt symmetrisch zueinander ausgebildet. Dies ermöglicht die Bildung einer dichten und dauerhaften Pressverbindung, indem beidseitig des Ringwulsts (und damit der Ringdichtung) eine stabile Verpressung in der Art eines "Flaschenhalses" geschaffen wird. Die nachfolgenden Aussagen zu bevorzugten Ausgestaltungen des ersten Bereichs treffen jeweils auch auf den dritten Bereich zu.

Bei einer bevorzugten Ausführungsform ist der Querschnitt des zweiten zylindrischen Abschnitts in einem dem Ringwulst benachbarten vierten Bereich auf dessen Aussenseite verringert. Die beiden Seiten des Ringwulsts sind dabei bevorzugt symmetrisch zueinander ausgebildet. Damit kann die notwendige Presskraft beidseitig des Ringwulsts verringert werden. Die nachfolgenden Aussagen zu bevorzugten Ausgestaltungen des zweiten Bereichs treffen jeweils auch auf den vierten Bereich zu.

Alternativ ist die Erfindung auch einsetzbar, wenn nur der Ringwulst selbst und auf einer Seite des Ringwulsts mit dem Presswerkzeug verformt wird.

Bevorzugt schliesst der zweite Bereich unmittelbar an den Ringwulst an. Dadurch wird eine maximale Wirkung als "Soll-Knickstelle" erreicht, ohne dass der Querschnitt des Anschlussstücks massiv reduziert werden muss.

Alternativ kann der zweite Bereich aber auch in einem gewissen Abstand zum Ringwulst vorhanden sein, wobei gegebenenfalls die Dimensionen des zweiten Bereichs anders gewählt werden müssen als bei einer Anordnung direkt angrenzend an den Ringwulst.

Bei bestimmten Ausführungsformen ist der zweite Bereich umlaufend muldenförmig ausgebildet. Er hat also beispielsweise im Querschnitt eine halbrunde Form und verläuft als ringförmige Vertiefung im zylindrischen Abschnitt. Diese Ausgestaltung ermöglicht eine gleichmässige Verformung an dieser "Soll-Knickstelle", wobei die mechanische Stabilität erhalten bleibt. Weil scharfe Kanten fehlen, werden die auftretenden Kräfte bestmöglich sowohl axial als auch entlang des Umfangs im ersten Bereich verteilt.

Alternativ kann die Verringerung des Querschnitts im zweiten Bereich auch anders ausgebildet sein. Insbesondere kann der Querschnitt entlang des Umfangs nur abschnittsweise verringert sein. Der Querschnitt der Regionen mit verringertem Querschnitt muss zudem nicht überall dieselbe Form haben.

Mit Vorteil beträgt eine maximale Tiefe des zweiten Bereichs 10 - 30 %, bevorzugt 15 - 25 %, einer Dicke des zylindrischen Abschnitts (wobei darunter die Wandstärke des Abschnitts ausserhalb des ersten und des zweiten Bereichs verstanden wird). Eine derartige Tiefe führt bei üblichen Wandstärken zu einer Definition einer klaren Soll-Knickstelle und damit zu einer ausreichenden Verringerung der Kräfte zum Verformen des Anschlussstücks im Rahmen des Pressvorgangs, wobei aber eine ausreichende Festigkeit des Anschlussstücks erhalten bleibt.

Im Fall einer besonders grossen oder einer besonders kleinen Wandstärke des Anschlussstücks kann die Tiefe aber auch grösser bzw. kleiner sein als gemäss der angegebenen Bereiche.

Das Verhältnis eines Innendurchmessers des zylindrischen Abschnitts zu einem axialen Abstand zwischen dem ersten Bereich und dem Ringwulst liegt zwischen 1.5 und 7.5, insbesondere zwischen 2.5 und 6. Mit Abstand ist dabei die Distanz zwischen den einander zugewandten Grenzen des Ringwulsts bzw. des ersten Bereichs gemeint, d. h. die Länge des dazwischenliegenden zylindrischen Abschnitts. Eine solche Geometrie hat sich als optimal für die Schaffung einer mechanisch festen Verbindung herausgestellt und erfordert keine Anpassung der Presswerkzeuge.

Das Anschlussstück ist aus einer Siliciumbronze gefertigt, bei welcher es sich um eine Kupferlegierung mit Si, Zn und wenigstens 80 Gew.-% Cu handelt. Bevorzugt weist die Kupferlegierung insbesondere folgende Legierungsbestandteile in Gew.-% auf:
a) 2 % ≤ Si ≤ 4.5 %, bevorzugt 2.8 % ≤ Si ≤ 4 %, und
b) 1 % ≤ Zn ≤ 17 %, bevorzugt 5 % ≤ Zn ≤ 15 %, und
c) 0.05 % ≤ Mn ≤ 2 %, bevorzugt 0.2 % ≤ Mn ≤ 0.6 %, und
d) optional 0.05 % ≤ Al ≤ 0.4 %, und
e) optional 0.05 % ≤ Sn ≤ 2 %, und
f) wobei unvermeidbare Verunreinigungen in der Summe mit einem Anteil von maximal 0.5 %, bevorzugt 0.3 %, vorliegen und
g) der restliche Anteil bevorzugt aus Cu besteht.

Diese Legierung und vorteilhafte Ausführungsvarianten und Herstellungs- sowie Verarbeitungsverfahren sind bereits in der EP 1 801 250 A1 (Viega GmbH & Co. KG) beschrieben. Wie bereits erwähnt, ist dieses Material besonders für Trinkwasser-Anwendungen geeignet, weil es einfach verarbeitbar ist und eine geringe Migration von Metallionen in das Medium, beispielsweise von Blei- und Nickelionen in das Trinkwasser, aufweist.

Der erste Bereich ist als umlaufende Erhebung mit im Wesentlichen trapezförmigem Querschnitt ausgebildet, d. h. die Erhebung weist eine Aussenfläche auf, die einer zylindrischen Mantelfläche entspricht, wobei der Zylinderdurchmesser grösser ist als der Durchmesser des zylindrischen Abschnitts. Mit dieser Aussenfläche können vorhandene bzw. vorbekannte Presswerkzeuge mit vorhandenen bzw. vorbekannten Pressbacken zusammenwirken wie mit den üblichen Aussenflächen von vorbekannten Steckverbindern. Die an diese Aussenfläche anschliessenden Flanken können in einem Winkel schräg abfallen oder mit der Aussenfläche und dem umgebenden zylindrischen Abschnitt jeweils rechte Winkel einschliessen (so dass in diesem Fall der Querschnitt der Erhebung rechteckig ist). Die Übergänge zwischen den Abschnitten können auch abgerundet sein.

Mit Vorteil beträgt eine maximale Höhe des ersten Bereichs 10 - 45 %, bevorzugt 20 - 35 %, einer Dicke des zylindrischen Abschnitts (wobei darunter die Wandstärke des Abschnitts ausserhalb des ersten und des zweiten Bereichs verstanden wird). Eine derartige Höhe führt bei üblichen Wandstärken zu einer ausreichenden Verformung bei der Benutzung eines üblichen Presswerkzeugs.

Im Fall einer besonders grossen oder einer besonders kleinen Wandstärke des Anschlussstücks kann die Höhe aber auch grösser bzw. kleiner sein als gemäss der angegebenen Bereiche.

Wenn sowohl ein Bereich verringerten als auch ein Bereich vergrösserten Querschnitts vorhanden sind, ist bevorzugt, dass die Höhe des ersten Bereichs grösser ist als die Tiefe des zweiten Bereichs, wobei die Höhe insbesondere das 1.1 - bis 1.5fache der Tiefe beträgt.

Eine axiale Ausdehnung des ersten Bereichs beträgt 1.0-5.0 mm, insbesondere 2.0 - 4.0 mm. Bei der Verwendung der bekannten Presswerkzeuge, welche beispielsweise eine Kontur mit einer axialen Breite von 2 mm erzeugen, ist somit sichergestellt, dass der gesamte verformte Abschnitt den erhöhten Querschnitt aufweist und somit eine ausreichende Verformung stattfindet.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine Darstellung der Zugspannung in Abhängigkeit von der Zugdehnung für eine Silicium-Bronze im Vergleich zu Rotguss und Edelstahl;
- Fig. 2: eine schematische Querschnittsdarstellung einer ersten Ausführungsform eines erfindungsgemässen Anschlussstücks in unverpresstem Zustand;
- Fig. 3: einen vergrösserten Ausschnitt aus der Figur 2, in welchem die Bereiche mit verringertem bzw, vergrössertem Querschnitt sichtbar sind; und
- Fig. 4: eine schematische Querschnittsdarstellung einer zweiten Ausführungsform eines erfindungsgemässen Anschlussstücks in verpresstem Zustand.

Grundsätzlich sind in den Figuren gleiche Teile mit gleichen Bezugszeichen versehen.

### Wege zur Ausführung der Erfindung

Die Figur 1 ist eine Darstellung der Zugspannung in Abhängigkeit von der Zugdehnung für eine Silicium-Bronze im Vergleich zu Rotguss und Edelstahl. Auf der horizontalen Achse ist die Zugdehnung in % aufgetragen, auf der vertikalen Achse die Zugspannung in MPa. Die Kurve ist das Ergebnis eines Zugversuchs nach DIN 50125.

Bei der Silicium-Bronze (ausgezogene Linie 41) handelt es sich um eine Kupferlegierung aus 3.3 % Si, 10 % Zn, 0.07 % Mn und 86.4 % Cu, wobei unvermeidbare Verunreinigungen mit einem Anteil von 0.23 % vorliegen.

Beim Rotguss (doppelt strichtpunktierte Linie 42) handelt es sich um Rotguss CC499K (nach DIN EN 1982). Beim Edelstahl (gestrichelte Linie 43) handelt es sich um Cr/Ni-Stahl 1.4401. Wie aus der Darstellung ersichtlich ist, beträgt die Elastizitätsgrenze bei Rotguss ca. 130 MPa, während sie für Silicium-Bronze bei ca. 200 MPa liegt und für Edelstahl bei ca. 330 MPa.

Bei einer beispielhaft gegebenen Zugdehnung von 21% beträgt die Rückfederung 44 bei Rotguss ca. 1%, bei der Silicium-Bronze beträgt die Rückfederung 45 ca. 1.7%. Bei einer gegebenen Verformung wird sich somit nach Wegnahme der Kraft die Form der Silicium-Bronze deutlich stärker zurückbilden als bei Rotguss.

Obwohl Edelstahl eine deutlich höhere Elastizitätsgrenze besitzt und höhere Verformungskräfte erfordert als die anderen Materialien, ist die Rückfederung aufgrund des hohen Elastizitätsmoduls von Edelstahl vergleichsweise gering und liegt im Bereich der Rückfederung von Rotguss. Das der Erfindung zugrunde liegende Problem der hohen Rückfederung ist also bei Edelstahl nicht in besonderem Mass ausgeprägt.

Ebenfalls ersichtlich aus der Darstellung ist, dass über einen recht grossen Bereich bei gleicher Geometrie für das Erreichen derselben Verformung in Silicium-Bronze ungefähr das 1.3-1.7fache der in Rotguss benötigten Kraft aufzuwenden ist.

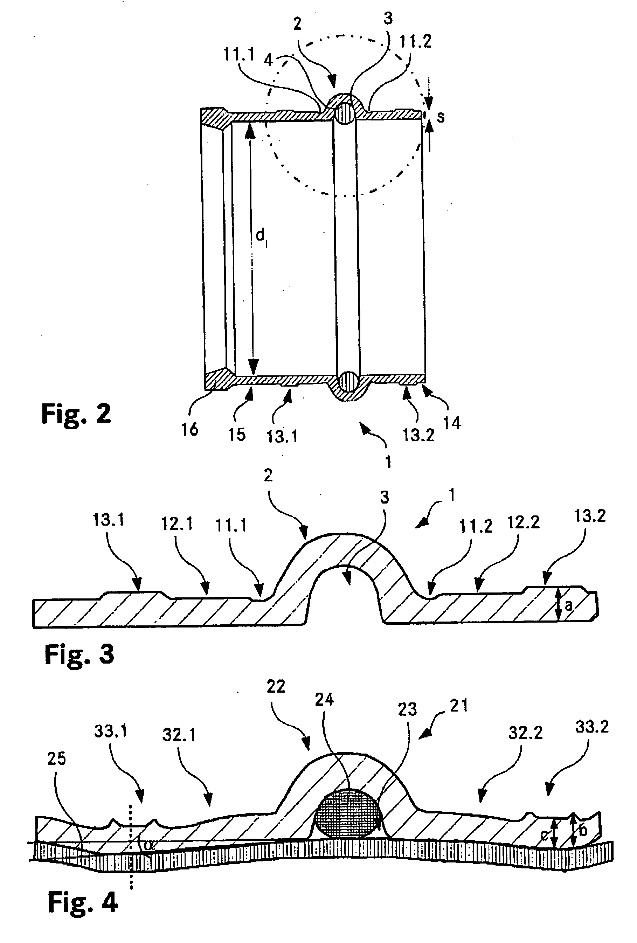

Die Figur 2 zeigt eine schematische Querschnittsdarstellung einer ersten Ausführungsform eines erfindungsgemässen Anschlussstücks in unverpresstem Zustand, in der Figur 3 ist ein vergrösserter Ausschnitt aus der Figur 2 gezeigt, in welchem die Bereiche mit verringertem bzw. vergrössertem Querschnitt sichtbar sind. Der in der Figur 2 gezeigte Ausschnitt ist in der Figur 1 durch den doppelt strichtpunktierten Kreis angegeben.

Das Anschlussstück 1 bildet einen Teil eines Fittings bzw. einer Armatur und ist einstückig mit diesem aus Silicium-Bronze hergestellt (Kupferlegierung aus 3.3 % Si, 10 % Zn, 0.07 % Mn und 86.4 % Cu, wobei unvermeidbare Verunreinigungen mit einem Anteil von 0.23 % vorliegen, ungeglüht). Das Anschlussstück 1 ist zur Aufnahme eines Endes eines Rohrs, insbesondere eines Metallrohrs (z. B. aus Edelstahl) geeignet. Die Herstellung eines Anschlussstücks aus einer solchen Legierung ist in der EP 1 801 250 A1 (Viega GmbH & Co. KG), die Herstellung einer Armatur in der EP 2 014 964 A1 (R. Nussbaum AG) beschrieben.

Das dargestellte Ausführungsbeispiel ist auf die Norm DN 50 ausgerichtet. Das Anschlussstück 1 ist im Wesentlichen zylindrisch, sein Innendurchmesser d, beträgt 54.4 mm, die Wandstärke s beträgt in den zylindrischen Bereichen ohne Querschnittsvergrösserung bzw. Verringerung 1.5 mm. Sie entspricht somit weitgehend einer üblichen Wandstärke bei Rotguss-Anschlussstücken derselben Dimension. Ungefähr mittig im Anschlussbereich des Anschlussstücks 1 ist ein Ringwulst 2 ausgebildet. Die Wandstärke des Anschlussstücks 1 ist auch im Bereich des Ringwulsts 2 ungefähr gleich wie in den angrenzenden zylindrischen Bereichen, so dass innerhalb des Ringwulsts 2 eine ringförmige Aufnahme 3 für einen O-Ring 4 gebildet wird. Diese Aufnahme 3 kann mit einer Kontur versehen sein, die sicherstellt, dass die Verbindung in unverpresstem Zustand undicht ist (siehe z. B. EP 1 171 731 B1, Franz Viegener 11 GmbH & Co. KG), und/oder es wird ein O-Ring verwendet, der in unverpresstem Zustand keine vollständige Dichtwirkung hat. So werden irrtümlich unverpresste Verbindungsstellen bei der ersten Druckprobe mit Sicherheit festgestellt. Der Durchmesser des O-Rings 4 ist so bemessen, dass er im eingelegten Zustand geringfügig über die Innenseite des Anschlussstücks 1 hervorsteht, das Rohr sich aber in das Anschlussstück 1 einführen lässt, ohne den O-Ring 4 zu verletzen. Vor dem Einführen wird das Rohr entgratet, und wenn nötig angefast.

Damit die Innenseite des Anschlussstücks 1 im angepressten Zustand gut auf der äusseren Oberfläche des einzuschiebenden Rohres anliegt, ist die Innenseite glatt ausgedreht. Die Drehriefen sind gerade noch mit dem blossen Auge erkennbar. Beim unten beschriebenen Pressvorgang werden die Drehriefen abgeplattet und tragen damit zur Abdichtung bei. Die ringförmige Aufnahme 3 ist ebenfalls ausgedreht.

Unmittelbar anschliessend an den Ringwulst 2 weist die Aussenwand des Anschlussstücks 1 beidseitig ringförmig umlaufende Vertiefungen 11.1 , 11.2 mit halbrundem Querschnitt auf. Die maximale Tiefe der Ausnehmung beträgt dabei 0.27 mm. In Bezug auf den Ringwulst 2 aussen schliessen zylindrische Abschnitte 12.1, 12.2 an mit je einer Länge von 4 mm. Wiederum aussen anschliessend und weiterhin symmetrisch zum Ringwulst 2 ist der Querschnitt der Wandung des Anschlussstücks 1 vergrössert. Der erhöhte Bereich 13.1, 13.2 ist trapezförmig mit bezüglich den zylindrischen Abschnitten 12.1, 12.2 in einem Winkel von ca. 45° ansteigenden Flanken. Die (axiale) Länge der zylindrischen Region der erhöhten Bereiche 13.1, 13.2 beträgt 3.4 mm. Die Höhe des erhöhten Bereichs 13.1, 13.2 über den zylindrischen Bereichen beträgt 0.40 mm.

In Richtung des freien Endes des Anschlussstücks 1 schliesst sich ein kurzer zylindrischer Abschnitt 14 an. In der Gegenrichtung schliesst sich an den entsprechenden erhöhten Bereich 13.1 ebenfalls ein weiterer zylindrischer Abschnitt 15 mit einer Länge von 6.0 mm an. Anschliessend ist in an sich bekannter Weise ein Anschlag 16 für das freie Ende des einzuschiebenden Rohrs ausgebildet.

Das Anschlussstück 1 lässt sich nun mit einer Presszange auf ein eingeschobenes Rohr aufpressen. Eine geeignete Presszange ist in an sich bekannter Weise aufgebaut. Sie hat eine obere Backe und eine untere Backe, welche beide auf ihren Andruckflächen derart geformt sind, dass sie eine Aussparung haben, die um den Ringwulst 2 greift. Die Aussparung ist derart ausgebildet, dass sie beim Zusammendrücken zuerst auf die Wulstoberkante drückt und anschliessend auf den Wulstrand und gleichzeitig auch auf die zylindrischen Regionen der erhöhten Bereiche 13.1, 13.2. Beim Anpressen wird der 0-Ring 4 gegen die Aussenfläche des Rohres 5 gedrückt und die Länge des Anschlussstücks 1 geringfügig verlängert. Ferner bilden die Backen des Presswerkzeugs bei den erhöhten Bereichen 13.1, 13.2 im geschlossenen Zustand ein Sechseck. Beim Anpressen werden diese Bereiche 13.1, 13.2 also an je sechs Stellen links und rechts des Ringwulsts 2 eingedrückt; der Wulst wird als Ganzes verformt. Durch dieses Eindrücken wird das Anschlussstück 1 gegen das Rohr gepresst, wobei die Eindruckstellen beide Teile formschlüssig und damit dreh- und zugfest miteinander verbinden. Da auf beiden Seiten des Ringswulsts 2 verformt wird, kann die Eindrucktiefe zur Erreichung der vorgeschrieben Dreh- und Zugfestigkeit im Bereich plastischer Verformung des Anschlussstücks 1 so dimensioniert werden, dass keine Risse im Material auftreten.

Die erhöhten Bereiche 13.1, 13.2 führen bei vorgegebener Endposition der Pressbacken zu einer erhöhten Verformung des Anschlussstücks 1 in diesen Regionen. Die Wandstärke a des Anschlussstücks beträgt dort 1.9 mm. Da im Rahmen des Pressvorgangs aufgrund des verringerten Querschnitts in den Vertiefungen 11.1, 11.2 bei diesen Stellen ein geringfügiges Abknicken (oder "Eintauchen") des Anschlussstücks stattfindet, wird die aufzuwendende Presskraft für den vorgegebenen Weg der Pressbacken verringert. Aufgrund der erhöhten Verformung, welche primär durch die erhöhten Bereiche 13.1, 13.2 bedingt ist, ist das Anschlusstück auch nach dem Rückfedern nach Lösen des Presswerkzeugs noch ausreichend verformt, um eine sichere mechanische und dichte Verbindung zu schaffen.

Die Figur 4 zeigt eine schematische Querschnittsdarstellung einer zweiten Ausführungsform eines erfindungsgemässen Anschlussstücks in verpresstem Zustand, wobei primär der Ringwulst und die Bereiche mit vergrössertem Querschnitt sichtbar sind.

Das Anschlussstück 21 entspricht weitgehend dem im Zusammenhang mit den Figuren 2 und 3 beschriebenen Anschlussstück 1. So ist es aus demselben Material gefertigt und weist weitgehend dieselben Dimensionen auf. Von diesem unterscheidet sich das Anschlussstück 21 aber dadurch, dass es keine Bereiche mit verringertem Querschnitt angrenzend an den Ringwulst 22 aufweist. Die Bereiche 32.1, 32.2 zylindrischen Querschnitts erstrecken sich also von den erhöhten Bereichen 33.1, 33.2 jeweils bis zum Ringwulst 22. Das Anschlussstück 21 ist zudem in verpresstem Zustand dargestellt, d. h. der in seiner Aufnahme 23 den O-Ring 24 enthaltende Ringwulst 22 und die erhöhten Bereiche 33.1, 33.2 sind bereits mittels eines Presswerkzeugs gegen ein umschlossenes Edelstahlrohr 25 verpresst worden. Dargestellt ist zudem die Situation nach dem Entfernen des Presswerkzeugs, d. h. die Rückfederung des verpressten Materials hat bereits stattgefunden.

Wie in der Figur 4 deutlich sichtbar ist, ist die nach der Rückfederung verbleibende Verpressung ausreichend, um das Edelstahlrohr 25 im Anschlussstück 21 axial zu sichern. Da die Verpressung in den erhöhten Bereichen 33.1, 33.2 mittels eines Sechskantprofils erfolgt ist und die Verformung dort entsprechend entlang des Umfangs unterschiedlich ist, ist auch eine Verdrehsicherung gegeben. In den am stärksten verpressten Abschnitten des Umfangs beträgt die Wandstärke c noch ca. 1.6 mm. Axial an diese Abschnitte schliessen sich Regionen an, die den erhöhten Bereichen 33.1, 33.2 angehören, aber beim Verpressen nicht direkt vom Sechskantprofil kontaktiert wurden. Dort beträgt die Wandstärke b ca. 1.8 mm, sie ist also etwas geringer als die ursprüngliche Wandstärke in den erhöhten Bereichen 33.1, 33.2 aber deutlich grösser als die Wandstärke in dem am stärksten verpressten Regionen. Generell gilt a ≥ b > c.

Entscheidend ist letztlich die erreichte Verformung (nach Rückfederung), welche sich durch den Winkel α charakterisieren lässt. Dieser wird durch eine Gerade, welche den Innenquerschnitt der unverformten (bzw. minimal verformten) Abschnitte angibt, und eine Gerade, welche an der benachbarten Begrenzung des Ringwulsts 22 die erstgenannte Gerade schneidet und dann in der Mitte des durch das Presswerkzeug entlang einer Kontur (maximal) verformten Bereichs durch den Innenquerschnitt des verformten Anschlussstücks 21 verläuft, aufgespannt. Die initiale Verformung des Anschlussstücks wird mit Hilfe des Bereichs 33.1, 33.2 vergrösserten Querschnitts derart verstärkt, dass nach dem Rückfedern der Winkel α mindestens ungefähr dem entsprechenden Winkel bei einem bekannten Anschlussstück aus Rotguss entspricht. Mit Hilfe der erhöhten Bereiche 33.1, 33.2 wird dazu zunächst eine höhere Verformung erreicht als im Fall eines vorbekannten Anschlussstücks. Nach dem Rückfedern ist dann die Geometrie wieder vergleichbar.

Die eingepresste Kontur hat beispielsweise jeweils eine (axiale) Breite von 2 mm. Bei Anschlussstücken der Dimensionen DN15 bis DN35 sind die Pressbacken beispielsweise so ausgeformt, dass die Pressstellen einen Abstand von 16 mm haben (jeweils von innerem Rand zu innerem Rand gemessen), bei der Dimension DN42 beträgt der Abstand beispielsweise 20 mm, bei DN54 beispielsweise 24 mm. Die kreisringförmige Presskontur für den Ringwulst ist jeweils symmetrisch in der Mitte der Pressbacke angeordnet.

Statt das Anschlussstück in den erhöhten Bereichen links und rechts der Wulst an sechs Stellen einzudrücken, kann auch mit weniger oder bevorzugt mit mehr als sechs Druckstellen gearbeitet werden. Die richtige Anzahl Druckstellen richtet sich nach den zu verpressenden Materialien und deren Wandstärken.

Im Bereich des Ringwulsts kann in an sich bekannter Weise eine spezielle Kontur vorgesehen sein, welche dafür sorgt, dass die Pressverbindung in unverpresstem Zustand mit Sicherheit undicht, in verpresstem Zustand mit Sicherheit dicht ist, so dass ein unterlassener Pressvorgang sofort bemerkt wird.

Details der Geometrie des Ringwulsts, der Vertiefungen und der erhöhten Bereiche können im Rahmen der Erfindung ebenfalls abgewandelt werden, so insbesondere die Form dieser Bereiche, deren radiale und axiale Ausdehnung und deren Abstände sowie die Abstände zum Ringwulst.

Zusammenfassend ist festzustellen, dass durch die Erfindung ein Anschlussstück geschaffen wird, welches die Schaffung einer dichten Pressverbindung auch dann ermöglicht, wenn es aus einem Material mit hoher Elastizitätsgrenze und/oder starker Rückfederung hergestellt ist.

## Patentansprüche

1. Anschlussstück (1; 21) aus Metall zur Herstellung einer Pressverbindung, wobei
- das Anschlussstück aus einer Kupferlegierung mit Si, Zn und wenigstens 80 Gew.-% Cu hergestellt ist, wobei die Kupferlegierung folgende Legierungsbestandteile in Gew.-% aufweist:
a) 2 % ≤ Si ≤ 4.5 %, bevorzugt 2.8 % ≤ Si ≤ 4 %, und
b) 1 % ≤ Zn ≤ 17 %, bevorzugt 5 % ≤ Zn ≤ 15 %, und
c) 0.05 % ≤ Mn ≤ 2 %, bevorzugt 0.2 % ≤ Mn ≤ 0.6 %, und
d) optional 0.05 % ≤ Al ≤ 0.4 %, und
e) optional 0.05 % ≤ Sn ≤ 2 %, und
f) wobei unvermeidbare Verunreinigungen in der Summe mit einem Anteil von maximal 0.5 %, bevorzugt 0.3 %, vorliegen und
g) der restliche Anteil bevorzugt aus Cu besteht;
- das Anschlussstück (1; 21) einen im Wesentlichen zylindrischen Abschnitt sowie einen an den zylindrischen Abschnitt angrenzenden Ringwulst (2; 22) mit einer darin ausgebildeten Ringnut (3; 23) zur Aufnahme einer Ringdichtung (4; 24) aufweist;
- ein Querschnitt des zylindrischen Abschnitts in einem vom Ringwulst (2; 22) beabstandeten ersten Bereich (13.1; 33.1) auf dessen Aussenseite vergrössert ist;
- der erste Bereich (13.1, 13.2; 33.1, 33.2) als umlaufende Erhebung mit trapezförmigem Querschnitt ausgebildet ist;
- eine axiale Ausdehnung des ersten Bereichs (13.1, 13.2; 33.1, 33.2) 1.0-5.0 mm, insbesondere 2.0 - 4.0 mm, beträgt und
- ein Verhältnis eines Innendurchmessers des zylindrischen Abschnitts zu einem axialen Abstand zwischen dem ersten Bereich (13.1, 13.2; 33.1, 33.2) und dem Ringwulst (2; 22) zwischen 1.5 und 7.5, insbesondere zwischen 2.5 und 6, liegt.

2. Anschlussstück nach Anspruch 1, **dadurch gekennzeichnet, dass** der Querschnitt des zylindrischen Abschnitts in einem dem Ringwulst (2) benachbarten zweiten Bereich (11.1) auf dessen Aussenseite verringert ist.

3. Anschlussstück nach Anspruch 1 oder 2, **gekennzeichnet durch** einen zweiten zylindrischen Abschnitt, welcher auf einer dem ersten zylindrischen Abschnitt entgegengesetzten Seite an den Ringwulst (2; 22) angrenzt, wobei ein Querschnitt des zweiten zylindrischen Abschnitts in einem vom Ringwulst (2; 22) beabstandeten dritten Bereich (13.2; 33.2) auf dessen Aussenseite vergrössert ist.

4. Anschlussstück nach Anspruch 3, **dadurch gekennzeichnet, dass** der Querschnitt des zweiten zylindrischen Abschnitts in einem dem Ringwulst (2) benachbarten vierten Bereich (11.2) auf dessen Aussenseite verringert ist.

5. Anschlussstück nach Anspruch 2 oder 4, **dadurch gekennzeichnet, dass** der zweite Bereich (11.1, 11.2) unmittelbar an den Ringwulst (2) anschliesst.

6. Anschlussstück nach einem der Ansprüche 1 bis 4, **dadurch gekennzeichnet, dass** der zweite Bereich (11.1, 11.2) umlaufend muldenförmig ausgebildet ist.

7. Anschlussstück nach einem der Ansprüche 1 bis 6, **dadurch gekennzeichnet, dass** eine maximale Tiefe des zweiten Bereichs (11.1, 11.2) 10-30%, bevorzugt 15-25%, einer Dicke des zylindrischen Abschnitts beträgt,

8. Anschlussstück nach einem der Ansprüche 1 bis 7, **dadurch gekennzeichnet, dass** eine maximale Höhe des ersten Bereichs (13.1, 13.2; 33.1, 33.2) 10-45%, bevorzugt 20 - 35 %, einer Dicke des zylindrischen Abschnitts beträgt.

9. Verbindungsstück mit mindestens einem Anschlussstück (1; 21) nach einem der Ansprüche 1 bis 8.

10. Armatur mit mindestens einem Anschlussstück (1; 21) nach einem der Ansprüche 1 bis 8.

## Claims

1. Connecting piece (1; 21) consisting of metal for producing a crimp connection, wherein
- the connecting piece is produced from a copper alloy with Si, Zn and at least 80 wt.% of Cu, wherein the copper alloy has the following alloy constituents in wt.%:
a) 2% ≤ Si ≤ 4.5%, preferably 2.8% ≤ Si ≤ 4%, and
b) 1% ≤ Zn ≤ 17%, preferably 5% ≤ Zn ≤ 15%, and
c) 0.05% ≤ Mn ≤ 2%, preferably 0.2% ≤ Mn ≤ 0.6%, and
d) optionally 0.05% ≤ Al ≤ 0.4%, and
e) optionally 0.05% ≤ Sn ≤ 2%, and
f) wherein unavoidable impurities exist in the total with a proportion of at most 0,5%, preferably 0.3% and
g) the remaining proportion preferably consists of Cu;
- the connecting piece (1; 21) has a basically cylindrical portion and also an annular protuberance (2; 22), adjoining the cylindrical portion, with an annular groove (3; 23) formed therein for accommodating a sealing ring (4; 24);
- a cross section of the cylindrical portion, in a first region (13.1; 13.2) which is at a distance from the annular protuberance (2; 22), is enlarged on its outer side;
- the first region (13.1, 13.2; 33.1, 33.2) is designed as an encompassing elevation with trapezoidal cross section;
- an axial extent of the first region (13.1, 13.2; 33.1, 33.2) is 1.0 - 5.0 mm, especially 2.0 - 4.0 mm and
- a ratio of an inside diameter of the cylindrical portion to an axial distance between the first region (13,1, 13.2; 33.1, 33.2) and the annular protuberance (2; 22) lies between 1.5 and 7.5, especially between 2.5 and 6.

2. Connecting piece according to Claim 1, **characterized in that** the cross section of the cylindrical portion, in a second region (11.1) which is adjacent to the annular protuberance (2), is reduced on its outer side.

3. Connecting piece according to Claim 1 or 2, **characterized by** a second cylindrical portion which on a side opposite the first cylindrical portion adjoins the annular protuberance (2; 22), wherein a cross section of the second cylindrical portion, in a third region (13.2; 33.2) which is at a distance from the annular protuberance (2; 22), is enlarged on its outer side.

4. Connecting piece according to Claim 3, **characterized in that** the cross section of the second cylindrical portion, in a fourth region (11.2) which is adjacent to the annular protuberance (2), is reduced on its outer side.

5. Connecting piece according to Claim 2 or 4, **characterized in that** the second region (11.1, 11.2) directly adjoins the annular protuberance (2).

6. Connecting piece according to one of Claims 1 to 4, **characterized in that** the second region (11.1, 11.2) is of a circumferentially trough-shaped design.

7. Connecting piece according to one of Claims 1 to 6, **characterized in that** a maximum depth of the second region (11.1, 11.2) is 10 - 30%, preferably 15 - 25%, of a thickness of the cylindrical portion.

8. Connecting piece according to one of Claims 1 to 7, **characterized in that** a maximum height of the first region (13.1, 13.2; 33.1, 33.2) is 10 - 45%, preferably 20 - 35%, of a thickness of the cylindrical portion,

9. Coupling piece with at least one connecting piece (1; 21) according to one of Claims 1 to 8.

10. Valve with at least one connecting piece (1; 21) according to one of Claims 1 to 8.

## Revendications

1. Pièce de raccordement (1; 21) en métal pour réaliser un assemblage serré, dans lequel
- la pièce de raccordement est fabriquée en un alliage de cuivre avec Si, Zn et au moins 80 % en poids de Cu, dans lequel l'alliage de cuivre présente les composants d'alliage suivants, en % en poids:
a)2 % ≤ Si ≤ 4,5 %, de préférence 2,8 % ≤ Si ≤ 4 %, et
b)1 % ≤ Zn ≤ 17 %, de préférence 5 % ≤ Zn ≤ 15 %, et
c)0,05 % ≤ Mn ≤ 2 %, de préférence 0,2 % ≤ Mn ≤ 0,6 % et
d)en option 0,05 % ≤ Al ≤ 0,4 %, et
e)en option 0,05 % ≤ Sn ≤ 2 %, et
f)dans laquelle des impuretés inévitables sont présentes au total en une proportion au maximum de 0,5 %, de préférence de 0,3 %, et
g)la fraction restante se compose de préférence de Cu;
- la pièce de raccordement (1; 21) présente une partie essentiellement cylindrique ainsi qu'un bourrelet annulaire (2; 22) adjacent à la partie cylindrique, dans lequel est formée une rainure annulaire (3; 23) destinée à recevoir un joint torique (4; 24);
- une section transversale de la partie cylindrique augmente sur son côté extérieur dans une première région (13.1; 33.1) éloignée du bourrelet annulaire (2; 22);
- la première région (13.1, 13.2; 33.1, 33.2) est constituée par une surélévation périphérique de section transversale trapézoïdale;
- une extension axiale de la première région (13.1, 13.2; 33.1, 33.2) vaut 1,0 - 5,0 mm, en particulier 2,0 - 4,0 mm, et
- un rapport d'un diamètre intérieur de la partie cylindrique à une distance axiale entre la première région (13.1, 13.2; 33.1, 33.2) et le bourrelet annulaire (2; 22) se situe entre 1,5 et 7,5, en particulier entre 2,5 et 6.

2. Pièce de raccordement selon la revendication 1, **caractérisée en ce que** la section transversale de la partie cylindrique est réduite sur son côté extérieur dans une deuxième région (11.1) voisine du bourrelet annulaire (2).

3. Pièce de raccordement selon la revendication 1 ou 2, **caractérisée par** une deuxième partie cylindrique, qui est adjacente au bourrelet annulaire (2; 22) sur un côté situé à l'opposé de la première partie cylindrique, dans laquelle une section transversale de la deuxième partie cylindrique est augmentée sur son côté extérieur dans une troisième région (13.2; 33.2) éloignée du bourrelet annulaire (2; 22).

4. Pièce de raccordement selon à revendication 3, **caractérisée en ce que** la section transversale de la deuxième partie cylindrique est réduite sur son côté extérieur dans une quatrième région (11.2) voisine du bourrelet annulaire (2).

5. Pièce de raccordement selon la revendication 2 ou 4, **caractérisée en ce que** la deuxième région (11.1, 11.2) se raccorde directement au bourrelet annulaire (2).

6. Pièce de raccordement selon l'une quelconque des revendications 1 à 4, **caractérisée en ce que** la deuxième région (11.1, 11.2) est formée en périphérie en forme d'auge.

7. Pièce de raccordement selon l'une quelconque des revendications 1 à 6, **caractérisée en ce qu'**une profondeur maximale de la deuxième région (11.1, 11.2) vaut 10 - 30 %, de préférence 15 - 25 % d'une épaisseur de la partie cylindrique.

8. Pièce de raccordement selon l'une quelconque des revendications 1 à 7, **caractérisée en ce qu'**une hauteur maximale de la première région (13.1, 13.2; 33.1, 33.2) vaut 10 - 45 %, de préférence 20 - 35 %, d'une épaisseur de la partie cylindrique.

9. Pièce d'assemblage avec au moins une pièce de raccordement (1; 21) selon l'une quelconque des revendications 1 à 8.

10. Armature avec au moins une pièce de raccordement (1; 21) selon l'une quelconque des revendications 1 à 8.
